# EUROPEAN PATENT APPLICATION

(11) **EP 4 579 913 A1**
(43) Date of publication of application: **02.07.2025**
(21) Application number: 23914037.9
(22) Date of filing: 05.01.2023
(51) Int. Cl.: H01M 50/342

(54) **PRESSURE RELIEF COMPONENT, BATTERY CELL, BATTERY AND ELECTRIC DEVICE**

(71) Applicant: Contemporary Amperex Technology (Hong Kong) Limited, Central (HK)
(72) Inventor: ZHOU, Wenlin, Ningde City, Fujian 352100 (CN); XU, Liangfan, Ningde City, Fujian 352100 (CN); CHENG, Qi, Ningde City, Fujian 352100 (CN); LI, Quankun, Ningde City, Fujian 352100 (CN); WANG, Peng, Ningde City, Fujian 352100 (CN)
(74) Representative: Kraus & Lederer PartGmbB
(86) International application number: PCT/CN2023/070754
(87) International publication number: WO 2024/145879

(57) **Abstract**

The embodiments of the present disclosure provide a pressure relief component, a battery cell, a battery, and an electrical device, relating to the technology field of batteries. The pressure relief component is configured for a battery cell. The pressure relief component is provided with a nick groove. At least two protrusions are arranged within the region enclosed by the nick groove, wherein the protrusions protrude from one side of the pressure relief component in a thickness direction, and the protrusions are recessed on the other side of the pressure relief component in the thickness direction. The battery cell comprising the pressure relief component has high reliability.

## Description

### TECHNICAL FIELD

The present disclosure relates to the technical field of battery, and particularly to a pressure relief component, a battery cell, a battery, and an electrical device.

### BACKGROUND ART

Energy conservation and emission reduction are the keys to the sustainable development of the automotive industry. Electric vehicles, due to their advantages of being energy-saving and environmentally friendly, have become an important component of sustainable development in the automotive industry. For electric vehicles, battery technology is another crucial factor that affects their development.

In the manufacturing process of batteries, in addition to increasing the energy density of batteries, reliability is also an issue that cannot be ignored. Hence, how to improve reliability is an urgent technical problem for battery technology.

### SUMMARY

The objective of the present disclosure is to provide a pressure relief component, a battery cell, a battery, and an electrical device. The battery cell comprising the pressure relief component has high reliability.

The present disclosure is realized by the following technical solutions.

In a first aspect, the present disclosure provides a pressure relief component configured for a battery cell. The pressure relief component is provided with a nick groove. At least two protrusions are arranged within the region enclosed by the nick groove, wherein the protrusions protrude from one side of the pressure relief component in a thickness direction, and the protrusions are recessed on the other side of the pressure relief component in the thickness direction.

According to the pressure relief component of the embodiment of the present disclosure embodiment, at least two protrusions are arranged within the region enclosed by the nick groove. The positions where the at least two protrusions are formed have a stress concentration region, the stress concentration region corresponds to the nick groove, and the nick groove is prone to cracking. Under the condition of meeting the same opening pressure, the groove depth of the nick groove can be shallower, and the residual thickness at the nick groove can be thicker, which can increase the strength at the nick groove and reduce the risk of premature cracking of the nick groove, thus allowing the pressure relief component to have a longer service life. The battery cell composed of the pressure relief component has higher reliability.

According to some embodiments of the present disclosure, the nick groove is in a circular shape.

In the above solution, the nick groove is in a circular shape, so that after the nick groove cracks, a larger pressure relief region is formed to achieve rapid pressure relief.

According to some embodiments of the present disclosure, a portion of the nick groove is arranged along an edge of the protrusion.

In the above solution, a portion of the nick groove is arranged along the edge of the protrusion, making the stress at the edge of the protrusion more concentrated, so that the nick groove is prone to cracking, which facilitates the release of internal pressure of the battery cell.

According to some embodiments of the present disclosure, the nick groove includes a first straight groove segment, a second straight groove segment, a first arc groove segment, and a second arc groove segment, wherein the first arc groove segment and the second arc groove segment are respectively arranged along the edges of the two protrusions, the first straight groove segment connects a first end of the first arc groove segment and a first end of the second arc groove segment, and the second straight groove segment connects a second end of the first arc groove segment and a second end of the second arc groove segment.

In the above solution, the first straight groove segment, the second straight groove segment, the first arc groove segment, and the second arc groove segment enclose an annular shape, wherein the first arc groove segment and the second arc groove segment are respectively arranged along the edges of the two protrusions. The first arc groove segment and the second arc groove segment are respectively provided with a larger corresponding region to the corresponding protrusion, so as to facilitate the cracking of the nick groove, with a simple structure and ease of processing.

According to some embodiments of the present disclosure, the pressure relief component includes a first surface and a second surface that are oppositely arranged along its thickness direction, wherein the first surface is provided with a recessed groove, the nick groove is arranged at a groove bottom wall of the recessed groove, and the protrusion is a portion of the groove bottom wall.

In the above solution, the arrangement of the recessed groove facilitates the processing of the nick groove and eases cracking. The recessed groove can be formed by stamping, making it convenient for processing and manufacturing.

According to some embodiments of the present disclosure, the groove bottom wall is provided with a third surface facing an opening of the recessed groove, and the protrusion protrudes from the third surface.

In the above solution, since the recessed groove is formed by the recess of the first surface, and the protrusion protrudes from the third surface, it allows for reasonable utilization of space in the direction perpendicular to the third surface, thus reducing space occupation.

According to some embodiments of the present disclosure, a height of the protrusion protruding from the third surface is H1, and a thickness of the nick groove arranged at the groove bottom wall is H2, satisfying a condition: 1≤H1/H2≤10.

In the above solution, the height of the protrusion protruding from the third surface satisfies the above relationship, which on one hand facilitates processing and manufacturing, and on the other hand, allows the groove bottom wall to have higher strength. If H1/H2 is relatively small (e.g., less than 1), the height of the protrusion protruding from the third surface is small, making processing and manufacturing more difficult; if H1/H2 is relatively large (e.g., greater than 10), the height of the protrusion protruding from the third surface is high, resulting in a lower strength of the groove bottom wall, so that the groove bottom wall is prone to cracking at the edge of the protrusion.

According to some embodiments of the present disclosure, 3≤H1/H2≤5.

In the above solution, compared to 1≤H1/H2≤10, when 3≤H1/H2≤5, on the one hand, the difficulty of processing and manufacturing is lower, and on the other hand, the strength of the groove bottom wall is higher.

According to some embodiments of the present disclosure, the protrusion protrudes from the first surface.

In the above solution, the protrusion protrudes from the first surface, thus allowing the groove bottom wall to have higher strength.

According to some embodiments of the present disclosure, at least two protrusions are arranged in a symmetrical manner about a geometric center of the region enclosed by the nick groove.

In the above solution, at least two protrusions are arranged in a symmetrical manner about the geometric center of the region enclosed by the nick groove, thus enabling the pressure relief component to have higher strength in the region enclosed by the nick groove. The forces in the region enclosed by the nick groove are balanced, which facilitates the cracking of the nick groove.

According to some embodiments of the present disclosure, the protrusion is formed by stamping.

In the above solution, the protrusion is formed by stamping, thus making processing and manufacturing easier.

In a second aspect, the embodiments of the present disclosure provide a battery cell, including a pressure relief component as provided in any of the above embodiments.

According to the battery cell of the embodiments of the present disclosure, the above-mentioned pressure relief component is adopted, which has a longer service life.

According to some embodiments of the present disclosure, the battery cell includes a shell and an end cover, wherein the shell is provided with an opening, the end cover closes the opening, the end cover is provided with a through hole, and the pressure relief component seals the through hole.

In the above solution, the through hole is a pressure relief hole, and the pressure relief component seals the through hole. Thus, the pressure relief component has a longer service life, which enables the battery cell to have good long-term reliability.

According to some embodiments of the present disclosure, the battery cell includes a shell and an end cover, the shell is provided with an opening, the end cover closes the opening, and the pressure relief component is the end cover.

In the above solution, the pressure relief component is the end cover, thus allowing the end cover to have a pressure relief function. A pressure relief structure is formed by providing a nick groove on the end cover, and thus, the pressure relief structure has better stability and good long-term reliability.

According to some embodiments of the present disclosure, the battery cell includes a shell and an end cover, the shell is provided with an opening, the end cover closes the opening, and the pressure relief component is the shell.

In the above solution, the pressure relief component is the shell, so the pressure relief component has both a function of accommodating the electrode assembly and a pressure relief function.

In a third aspect, the embodiments of the present disclosure provide a battery, including a battery cell as provided in any of the above embodiments.

In a fourth aspect, the embodiments of the present disclosure provide an electrical device, including a battery as provided in any of the above embodiments. The battery is configured to provide electrical energy.

The additional aspects and advantages of the present disclosure will be partially disclosed in the following description, while some may become evident from the description or be understood through practical implementation of the present disclosure.

### BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is an exploded view of a battery cell provided in some embodiments of the present disclosure;
FIG. 4 is an axonometric view of a pressure relief component provided by some embodiments of the present disclosure;
FIG. 5 is a top view of the pressure relief component shown in FIG. 4;
FIG. 6 is a sectional view in A-A direction of the pressure relief component shown in FIG. 5;
FIG. 7 is a partially enlarged view at B of the pressure relief component shown in FIG. 6;
FIG. 8 is a schematic diagram of an arrangement of multiple protrusions of a pressure relief component along a first direction provided in some embodiments of the present disclosure;
FIG. 9 is a schematic diagram of an arrangement of multiple protrusions of a pressure relief component along a second direction provided in some embodiments of the present disclosure;
FIG. 10 is a schematic diagram of structures of an end cover and a pressure relief component provided in some embodiments of the present disclosure;
FIG. 11 is a schematic diagram of a structure of a pressure relief component provided in some other embodiments of the present disclosure; and
FIG. 12 is a schematic diagram of a structure of a pressure relief component provided in some other embodiments of the present disclosure.

In the drawings, the drawings are not drawn to actual scale.

Reference numerals: 100- battery; 10- box; 11- first sub-box; 12- second sub-box; 20-battery cell; 21- housing; 211- shell; 212- end cover; 2121- through hole; 22- electrode assembly; 221- tab; 23- electrode terminal; 24- adapter; 3- pressure relief component; 31- nick groove; 311-first straight groove segment; 312 - second straight groove segment; 313- first arc groove segment; 313a- first end of the first arc groove segment; 313b- second end of the first arc groove segment; 314- second arc groove segment; 314a- first end of the arc groove segment; 314b- second end of the arc groove segment; 32- protrusion; 33- first surface; 34- second surface; 35- recessed groove; 351- groove bottom wall; 352- third surface; 36- connection region; 37- peripheral wall; 38-bottom wall; P1- first side; P2- second side; 200- controller; 300- motor; 1000- vehicle.

### DETAILED DESCRIPTION OF EMBODIMENTS

In order to make the objective, technical solutions, and advantages of the embodiments of the present disclosure clearer, the following description will provide a clear and comprehensive explanation of the technical solutions in the embodiments of the present disclosure with reference to the drawings of the present disclosure. Clearly, the described embodiments are part of the embodiments of the present disclosure and not the entire embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the technical field of the present disclosure. The terms used herein are used for the purpose of describing specific embodiments and are not intended to limit the present disclosure. The terms "comprise", "include", and any variations thereof as used in the description, claims, and the above-mentioned drawing descriptions of the present disclosure are intended to cover non-exclusive inclusions.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features.

The term "embodiment" used herein means that specific features, structures, or characteristics described in conjunction with the embodiment can be included in at least one embodiment of the present disclosure. The use of the phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the description of the present disclosure, it should be noted that, unless otherwise clearly stipulated and limited, the terms "provide", "interconnect", "connect", and "attach" should be understood in a broad sense. For example, it can be a fixed connection, a detachable connection, or an integral connection; and it can be a direct connection, an indirect connection through an intermediary, or an internal communication between two components. Those of ordinary skill in the art can understand the meanings of the above terms in the present disclosure according to specific situations.

In the present disclosure, the term "multiple" refers to two or more (including two). Similarly, "multiple groups" refers to two or more groups (including two groups), and "multiple pieces" refers to two or more pieces (including two pieces).

The development of battery technology needs to consider multiple design factors simultaneously, such as energy density, discharge capacity, charge-discharge rates, and other performance parameters. Additionally, the reliability of the battery also needs to be taken into consideration.

The battery cell includes a pressure relief structure, wherein the pressure relief structure can actuate to release the internal pressure of the battery cell. The actuation can include the rupture or opening of the pressure relief structure. For example, the pressure relief structure can include a nick groove, and the nick groove cracks, thereby achieving the pressure relief of the pressure relief structure.

In the related technology, in order to facilitate pressure release, the groove depth of the nick groove is relatively deep, which means that the thickness of a structure arranged at the nick groove is relatively thin, and when subjected to external force, the nick groove is prone to cracking. This causes the pressure relief structure to open by mistake, resulting in the failure of the pressure relief function and lower reliability of the battery cell.

In view of this, to solve the problem of the short service life of the pressure relief structure leading to the low reliability of the battery cell, the inventors have conducted in-depth research and designed a technical solution. At least two protrusions are arranged within the region enclosed by the nick groove. The positions where the at least two protrusions are formed have a stress concentration region, and the stress concentration region corresponds to the nick groove, so that the nick groove is prone to cracking. Therefore, under the condition of meeting the same opening pressure, the groove depth of the nick groove can be shallower, and the residual thickness at the nick groove can be thicker, which can increase the strength at the nick groove and reduce the risk of premature cracking of the nick groove, thus allowing the pressure relief component to have a longer service life. The battery cell composed of the pressure relief component has higher reliability.

The battery cell disclosed in the embodiments of the present disclosure can be used in various electrical devices, including but not limited to vehicles, ships, or aircraft. The power system of the electrical device can be comprised of the battery cell and battery disclosed in the embodiments of the present disclosure.

The embodiments of the present disclosure provide an electrical device that uses batteries as a power source. The electrical devices can include but are not limited to mobile phones, tablets, laptops, electric toys, power tools, electric bicycles, electric motorcycles, electric cars, ships, spacecraft, and so on. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electrical device is a vehicle 1000 as an example.

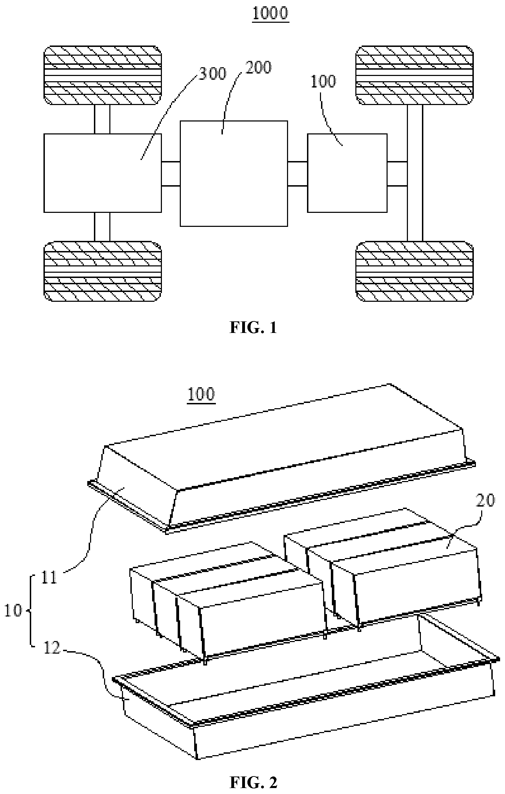

Referring to FIG. 1, FIG. 1 is a schematic diagram of a structure of a vehicle provided in some embodiments of the present disclosure. The vehicle 1000 can be a gasoline-powered car, a natural gas car, or a new energy vehicle. The new energy vehicles can be pure electric cars, hybrid cars, extended-range cars, and so on. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can be the operational power source for the vehicle 1000, which is configured to provide power to the electrical systems of the vehicle 1000, for example, for the working power requirements for starting, navigating, and running the vehicle 1000.

Additionally, the vehicle 1000 also comprises a controller 200 and a motor 300. The controller 200 is configured to manage the supply of power from the battery 100 to the motor 300, for example, for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially replace conventional fuels like gasoline or natural gas to provide driving propulsion for the vehicle 1000.

Referring to FIG. 2, FIG. 2 is an exploded view of a battery provided in some embodiments of the present disclosure. The battery 100 comprises a box 10 and a battery cell 20, wherein the box 20 is housed the battery cell 10. The box 10 is configured to provide a holding space for the battery cell 20, and the box 10 can be of various structures. In some embodiments, the box 10 can comprise a first sub-box 11 and a second sub-box 12, wherein the first sub-box 11 and the second sub-box 12 are capped with each other. The first sub-box 11 and the second sub-box 12 collectively define a holding space for accommodating the battery cell 20. The second sub-box 12 can be a hollow structure open at one end, and the first sub-box 11 can be a plate-like structure. The first sub-box 11 is capped over an opening side of the second sub-box 12 so that the first sub-box 11 and the second sub-box 12 together define a holding space. Additionally, both the first sub-box 11 and the second sub-box 12 can be hollow structures open at one end, and an opening side of the first sub-box 11 is capped over an opening side of the second sub-box 12.

In the battery 100, multiple battery cells 20 can be provided. The multiple battery cells 20 can be connected in series, parallel, or hybrid. Hybrid connection refers to having both series and parallel connections among multiple battery cells 20. The multiple battery cells 20 can be directly connected in series, parallel, or hybrid. Then, the whole comprising the multiple battery cells 20 is housed in the box 10. Of course, the battery 100 can also be in the form that, the multiple battery cells 20 are first connected in series, parallel, or hybrid to form battery modules, and then the multiple battery modules are connected in series, parallel, or hybrid to be formed into a whole, which is then accommodated within the box 10. The battery 100 can also comprise other structures. For example, the battery 100 can also comprise a busbar component, which is configured for achieving electrical connections between the multiple battery cells 20.

The battery 100 mentioned in the embodiments of the present disclosure can include a single physical module that includes one or multiple battery cells 20 to provide higher voltage and capacity. When multiple battery cells 20 are provided, the multiple battery cells 20 are connected in series, in parallel, or in hybrid by means of electrical connectors.

In some embodiments, the battery 100 can be a battery module. When multiple battery cells 20 are provided, the multiple battery cells 20 are arranged and fixed to form a module.

In some embodiments, the battery 100 can be a battery pack, and the battery pack includes a box 10 and a battery cell 20, wherein the battery cell 20 or the battery module is housed within the box 10.

In some embodiments, the box 10 can be of a portion of the chassis structure of the vehicle 1000. For instance, a portion of the box 10 can be at least a portion of the floor of the vehicle 1000, or a portion of the box 10 can be at least a portion of the crossbeam and longitudinal beam of the vehicle 1000.

In some embodiments, the battery 100 can be an energy storage device. The energy storage device includes storage containers, energy storage cabinets, and the like.

In the embodiment of the present disclosure, the battery cell 20 can be a secondary battery, where the secondary battery refers to a battery cell 20 that can be recharged to activate the active material and continue to be used after the battery cell 20 has been discharged.

The battery cell 20 can include lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, lead-acid batteries, etc. The embodiment of the present disclosure is not limited herein.

The battery cell 20 generally includes an electrode assembly 22. The electrode assembly 22 includes a positive electrode, a negative electrode, and a separator. During the charge and discharge process of the battery cell 20, active ions (such as lithium ions) are embedded and extracted back and forth between the positive electrode and the negative electrode. The separator is arranged between the positive electrode and the negative electrode, which can prevent short circuits between the positive and negative electrodes and allow active ions to pass through.

In some embodiments, the positive electrode can be a positive electrode sheet, and the positive electrode sheet can include a positive electrode current collector and positive electrode active material arranged on at least one surface of the positive electrode current collector.

As an example, the positive electrode current collector comprises two surfaces opposite each other in its thickness direction, and the positive electrode active material is provided on either or both of the two surfaces opposite the positive electrode current collector.

As an example, the positive electrode current collector can be made of a metal foil or composite current collector. For instance, as a metal foil, materials such as aluminum or stainless steel with silver surface treatment, stainless steel, copper, aluminum, nickel, carbon electrode, carbon, nickel, or titanium can be used. The composite current collector can include a polymer material base layer and a metal layer. The composite current collector can be formed by forming metallic materials (aluminum, aluminum alloys, nickel, nickel alloys, titanium, titanium alloys, silver and silver alloys, etc.) onto a base material of polymeric material (e.g., substrates of polypropylene, polyethylene terephthalate, polybutylene terephthalate, polystyrene, polyethylene, etc.).

As an example, the positive electrode active material can comprise at least one of the following materials: a lithium-containing phosphate, a lithium transition metal oxide, and respective modified compounds thereof. However, the present disclosure is not limited to these materials, and other conventional materials that can be utilized as positive electrode active material for battery cathodes can also be used.

In some embodiments, the negative electrode can be a negative electrode sheet, and the negative electrode sheet can include a negative electrode current collector.

As an example, the negative electrode current collector can be made of a metal foil or composite current collector. For instance, as a metal foil, materials such as aluminum or stainless steel with silver surface treatment, stainless steel, copper, aluminum, nickel, carbon electrode, carbon, nickel, or titanium can be used.

In some embodiments of the present disclosure, the negative electrode current collector includes two surfaces opposite each other in its thickness direction, and the negative electrode active material is provided on either or both of the two surfaces opposite the negative electrode current collector.

As an example, the negative electrode active material can be a negative electrode active material known in the art for use in the battery 100. As an example, the negative electrode active material can comprise at least one of the following materials: artificial graphite, natural graphite, soft carbon, hard carbon, silicon-based materials, tin-based materials, and lithium titanate. The silicon-based materials can be selected from at least one of elemental silicon, silicon oxides, silicon-carbon composites, silicon-nitrogen composites, and silicon alloys. The tin-based materials can be chosen from at least one of elemental tin, tin oxides, and tin alloys. However, the present disclosure is not limited to these materials, and other conventional materials that can be utilized as negative electrode active material for battery cathodes can also be used. The negative electrode active material can be used in only one alone or in a combination of more than two.

In some embodiments, the isolation member is a separator. The present disclosure does not impose specific restrictions on the type of separator and allows for the selection of any well-known porous structure separator with good chemical and mechanical stability.

As an example, the main material of the separator can be selected from at least one of glass fiber, nonwoven fabric, polyethylene, polypropylene, polyvinylidene fluoride, and ceramic. The separator can be a single-layer film or a multi-layer composite film, with no specific limitations. When the separator is a multi-layer composite film, the materials for each layer can be the same or different, with no specific restrictions. The isolation member can be a separate component arranged between the positive and negative electrodes or can be attached to the surface of the positive and negative electrodes.

In some embodiments, the isolation member is a solid electrolyte. The solid electrolyte is arranged between the positive electrode and the negative electrode and serves both to transport ions and to isolate the positive and negative electrodes.

In some embodiments, the electrode assembly is of a wound structure. The positive electrode sheet and the negative electrode sheet are wound into a wound structure.

In some embodiments, the electrode assembly is of a stacked structure.

In some embodiments, the battery cell 20 can include a housing. The housing is configured to encapsulate the electrode assembly, electrolyte, and other components. The housing can be made of materials such as steel, aluminum, plastic (e.g., polypropylene), composite metal (e.g., copper-aluminum composite housing), or aluminum-plastic film.

In some embodiments, the housing includes an end cover and a shell, the shell is provided with an opening, and the end cover seals the opening to form a sealed space configured for accommodating substances such as the electrode assembly and electrolyte. The shell can be provided with one or more openings. One or more end covers can also be provided.

In some embodiments, at least one electrode terminal is arranged on the housing, and the electrode terminal is electrically connected to the tab of the electrode assembly. The electrode terminal can be directly connected to the tab, or indirectly connected to the tab through an adapter. The electrode terminal can be arranged on the end cover or on the shell.

In some embodiments, a safety valve is arranged on the housing. The safety valve is configured to release the internal pressure of the battery cell.

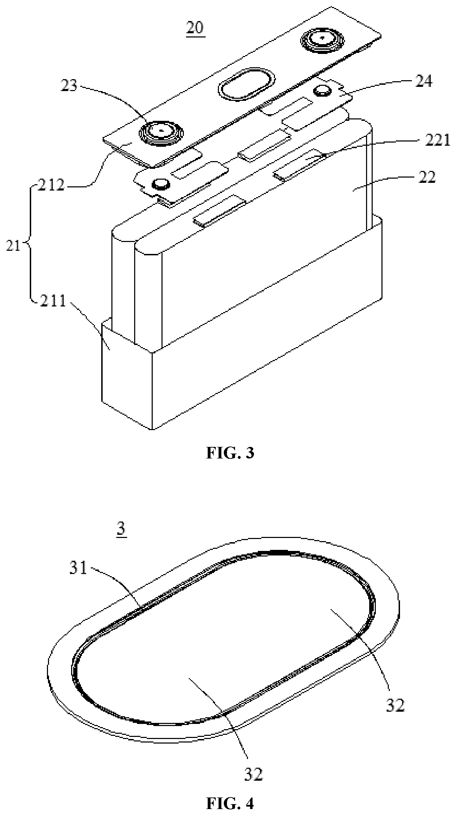

As an example, the battery cell can be cylindrical battery cells, prismatic battery cells, soft pouch battery cells, or battery cells of other shapes. The prismatic cells include square battery cells, blade battery cells, and multi-prismatic battery cells; and the multi-prismatic battery cells can be, for example, hexagonal battery cells. The embodiments of the present disclosure are not particularly limited herein. Referring to FIG. 3, the embodiment of the present disclosure is exemplified by a battery cell of a square battery cell.

Referring to FIG. 3, FIG. 3 is an exploded view of a battery cell provided in some embodiments of the present disclosure. As shown in FIG. 3, the battery cell 20 includes a housing 21, an electrode assembly 22, and a pressure relief component (not shown in FIG. 3). The housing 21 includes a shell 211 and an end cover 212, wherein the shell 211 is provided with an opening, and the end cover 212 seals the opening so as to isolate the internal environment of the battery cell 20 from the external environment.

The shell 211 is a component configured to cooperate with the end cover 212 to form the internal environment of the battery cell 20. The formed internal environment can be configured to house the electrode assembly 22, electrolyte, and other components. The shell 211 and the end cover 212 can be independent components. The shell 211 can be of various shapes and sizes. Specifically, the shape of the shell 211 can be determined based on the specific shape and size of the electrode assembly 22. The material of the shell 211 can vary, such as copper, iron, aluminum, stainless steel, aluminum alloy, and plastic. The embodiments of the present disclosure do not impose specific restrictions on this. The embodiments of the present disclosure are presented as an example where the shell 211 is of a rectangular shape.

The end cover 212 refers to the component that covers the opening of the shell 211 to isolate the internal environment of the battery cell 20 from the external environment. Without limitation, the shape of the end cover 212 can be adapted to fit the shape of the shell 211 to cooperate with the shell 211. Optionally, the end cover 212 can be made of a material with a certain hardness and strength, such as aluminum alloy. In this way, the end cover 212 is less likely to deform under compression or impact, allowing the battery cell 20 to have higher structural strength; and safety performance can be improved. Functional components such as electrode terminals 23 can be arranged on the end cover 212. The electrode terminal 23 can be configured to electrically connect to the electrode assembly 22 for outputting or inputting the electrical energy of the battery cell 20. The material of the end cover 212 can vary, such as copper, iron, aluminum, stainless steel, aluminum alloy, and plastic. The embodiments of the present disclosure do not impose specific restrictions on this. In some embodiments, an insulating structure can be arranged on the inner side of the end cover 212. The insulating structure can be configured to isolate the electrical connection components inside the shell 211 from the end cover 212, thus reducing the risk of short circuits. Exemplarily, the material of the insulating structure can be plastics, rubber, and other similar materials.

The electrode assembly 22 is the component within the battery cell 20 where electrochemical reactions occur. The shell 211 can contain one or more electrode assemblies 22.

The battery cell 20 further includes an adapter 24, wherein the adapter 24 is connected to the tab 221 and the electrode terminal 23 of the electrode assembly 22.

The pressure relief component is a component for releasing the internal pressure of the battery cell 20. When the internal pressure or temperature of the battery cell 20 reaches a threshold, the internal pressure of the battery cell 20 can be released through the pressure relief component. The pressure relief component can be a component arranged on the end cover 212, the shell 211 can be the pressure relief component, or the end cover 212 can be the pressure relief component. The specific structure of the pressure relief component is described in detail below in conjunction with the drawings.

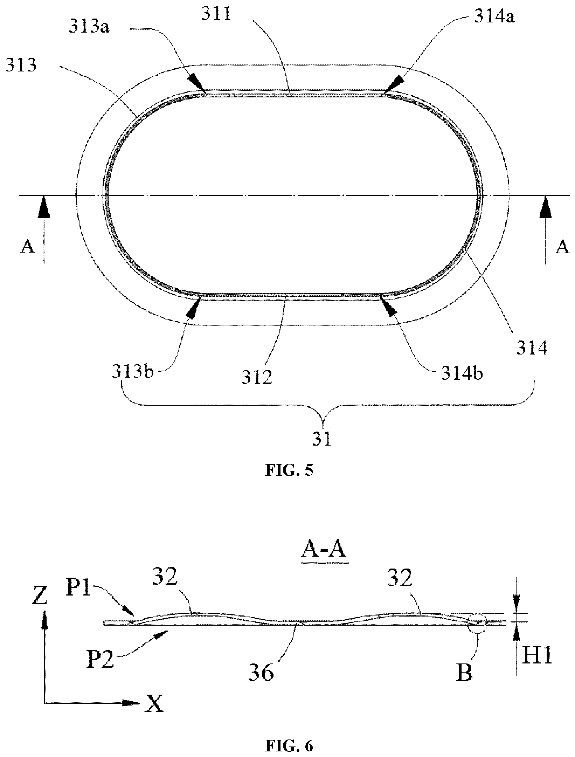

With reference to FIG. 4, FIG. 4 is an axonometric view of a pressure relief component provided by some embodiments of the present disclosure; FIG. 5 is a top view of the pressure relief component shown in FIG. 4; and FIG. 6 is a sectional view in A-A direction of the pressure relief component shown in FIG. 5. The embodiments of the present disclosure provide a pressure relief component 3, wherein the pressure relief component 3 is provided with a nick groove 31. At least two protrusions 32 are arranged within the region enclosed by the nick groove 31, wherein the protrusions 32 protrude from one side of the pressure relief component 3 in a thickness direction, and the protrusions 32 are recessed on the other side of the pressure relief component 3 in the thickness direction.

In the drawing, the direction indicated by the letter Z is the thickness direction of the pressure relief component 3.

The pressure relief component 3 can be a component mounted on the end cover 212, for example, the pressure relief component 3 can be a rupture disc mounted on the end cover 212. The pressure relief component 3 can also be the end cover 212 as a whole. The pressure relief component 3 can be a portion of the shell 211, for example, the pressure relief component 3 can be a wall portion of the shell 211 or a portion of a wall portion.

The pressure relief component 3 includes a first side P1 and a second side P2 opposite to each other along its thickness direction. The protrusion 32 can protrude from the first side P1, and the protrusion 32 is recessed on the second side P2. The first side P1 can be the side of the pressure relief component 3 away from the inside of the battery cell 20, and the second side P2 can be the side of the pressure relief component 3 facing the inside of the battery cell 20.

The region enclosed by the nick groove 31 can be a closed region, for example, the nick groove 31 can be of an annular shape, and the region enclosed by the nick groove 31 can also be an open region. For example, the nick groove 31 can be C-shaped.

The protrusion 32 protrudes from one side in the thickness direction of the pressure relief component 3, and the protrusion 32 is recessed on the other side in the thickness direction of the pressure relief component 3. The protrusion 32 can be formed by stamping, thus making processing and manufacturing easier.

According to the pressure relief component 3 of the embodiment of the present disclosure embodiment, at least two protrusions 32 are arranged within the region enclosed by the nick groove 31. The positions where the at least two protrusions 32 are formed have a stress concentration region, the stress concentration region corresponds to the nick groove 31, and the nick groove 31 is prone to cracking. Under the condition of meeting the same opening pressure, the groove depth of the nick groove 31 can be shallower, and the residual thickness at the nick groove 31 can be thicker, which can increase the strength at the nick groove 31 and reduce the risk of premature cracking of the nick groove 31, thus allowing the pressure relief component 3 to have a longer service life. The battery cell 20 composed of the pressure relief component 3 has higher reliability.

According to some embodiments of the present disclosure, the protrusion 32 is formed by stamping.

The protrusion 32 is formed by stamping, and the pressure relief component 3 has stress concentration in the region where the protrusion is formed. The nick groove 31 corresponds to the stress concentration region, thus making the nick groove 31 prone to cracking.

In the above solution, the protrusion 32 is formed by stamping, thus making processing and manufacturing easier.

Referring to FIG. 4 and FIG. 5 and according to some embodiments of the present disclosure, the nick groove 31 is in a circular shape.

The shape of the nick groove 31 can be various, such as annular and rectangular ring.

During the pressure relief process of the pressure relief component 3, the pressure relief component 3 can crack along the nick groove 31, thereby allowing the region enclosed by the nick groove 31 to open in a detached manner. This increases the pressure relief area of the pressure relief component 3 and improves the pressure relief rate of the pressure relief component 3.

In the above solution, the nick groove 31 is in a circular shape, so that after the nick groove 31 cracks, a larger pressure relief region is formed to achieve rapid pressure relief.

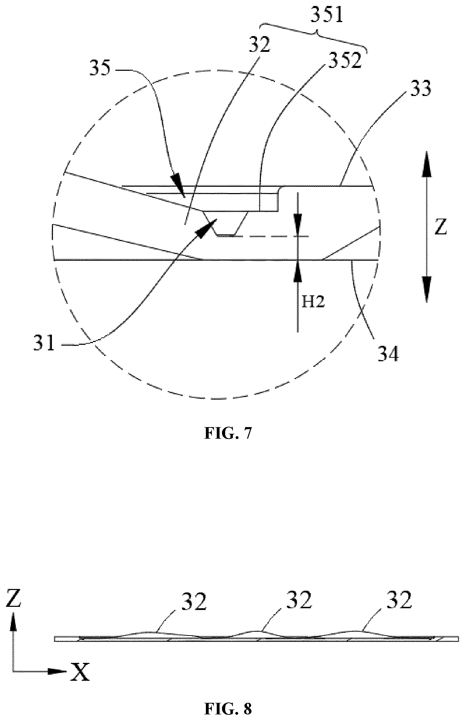

Referring to FIG. 6, and further referring to FIG. 7, FIG. 7 is a partially enlarged view at B of the pressure relief component shown in FIG. 6. According to some embodiments of the present disclosure, a portion of the nick groove 31 is arranged along an edge of the protrusion 32.

A portion of the nick groove 31 is arranged along the edge of the protrusion 32, which means that the extension direction of a portion of the nick groove 31 corresponds to the extension direction of the edge of the protrusion 32.

In the above solution, a portion of the nick groove 32 is arranged along the edge of the protrusion 31, making the stress at the edge of the protrusion 32 more concentrated, so that the nick groove 31 is prone to cracking, which facilitates the release of internal pressure of the battery cell 20.

Referring to FIG. 5 and according to some embodiments of the present disclosure, the nick groove 31 includes a first straight groove segment 311, a second straight groove segment 312, a first arc groove segment 313, and a second arc groove segment 314, wherein the first arc groove segment 313 and the second arc groove segment 314 are respectively arranged along the edges of the two protrusions 32, the first straight groove segment 311 connects a first end 313a of the first arc groove segment and a first end 314a of the second arc groove segment, and the second straight groove segment 312 connects a second end 313b of the first arc groove segment and a second end 314b of the second arc groove segment.

The first straight groove segment 311, the second straight groove segment 312, the first arc groove segment 313, and the second arc groove segment 314 are connected to form an annular shape. After the nick groove 31 cracks, the region enclosed by the nick groove 31 can open in a detached manner.

The first end 313a of the first arc groove segment and the first end 314a of the second arc groove segment are arranged opposite to each other, to facilitate the first straight groove segment 311 connecting the first end 313a of the first arc groove segment and the first end 314a of the second arc groove segment. The second end 313b of the first arc groove segment and the second end 314b of the second arc groove segment are arranged opposite to each other, to facilitate the second straight groove segment 312 connecting the second end 313b of the first arc groove segment and the second end 314b of the second arc groove segment.

The first straight groove segment 311 and the second straight groove segment 312 can be arranged in parallel.

Two protrusions 32 can be arranged within the region enclosed by the nick groove 31, or more than two protrusions 32 can be arranged. For example, as shown in FIG. 6, two protrusions 32 are arranged within the region enclosed by the nick groove 31, and the two protrusions 32 respectively correspond to the first arc groove segment 313 and the second arc groove segment 314.

In the above solution, the first straight groove segment 311, the second straight groove segment 312, the first arc groove segment 313, and the second arc groove segment 314 enclose an annular shape, wherein the first arc groove segment 313 and the second arc groove segment 314 are respectively arranged along the edges of the two protrusions 32. The first arc groove segment 313 and the second arc groove segment 314 are respectively provided with a larger corresponding region to the corresponding protrusion 32, so as to facilitate the cracking of the nick groove 31, with a simple structure and ease of processing.

Referring to FIGS. 6 and 7 and according to some embodiments of the present disclosure, the pressure relief component 3 includes a first surface 33 and a second surface 34 that are oppositely arranged along its thickness direction, wherein the first surface 33 is provided with a recessed groove 35, the nick groove 31 is arranged at a groove bottom wall 351 of the recessed groove 35, and the protrusion 32 is a portion of the groove bottom wall 351.

The first surface 33 and the second surface 34 are two surfaces of the pressure relief component 3 arranged opposite to each other in the thickness direction, and the first surface 33 and the second surface 34 can be parallel to each other. The thickness direction of the pressure relief component 3 can be perpendicular to the first surface 33 and the second surface 34.

The recessed groove 35 is formed by the first surface 33 being recessed toward the second surface 34. A portion of the groove bottom wall 351 protrudes toward the opening direction of the recessed groove 35 to form the protrusion 32, and the protrusion 32 forms a recess on the second surface 34.

The nick groove 31 is arranged on the groove bottom wall 351 of the recessed groove 35, and the nick groove 31 is prone to cracking, thus facilitating pressure relief.

In the above solution, the arrangement of the recessed groove 35 facilitates the processing of the nick groove 31 and eases cracking. The recessed groove 35 can be formed by stamping, making it convenient for processing and manufacturing.

According to some embodiments of the present disclosure, the nick groove 31 is arranged along the edge of the groove bottom wall 351 of the recessed groove 35, so that the region enclosed by the nick groove 31 is larger. After the nick groove 31 cracks, the pressure relief component 3 can form a pressure relief region with a larger area.

Referring to FIG. 6 and according to some embodiments of the present disclosure, two adjacent protrusions 32 are connected through a connection region 36, and both ends of the connection region 36 along the extension direction can respectively extend to the nick groove 31.

The connection region 36 is the region between two adjacent protrusions 32, and the connection region 36 connects the two adjacent protrusions 32.

When the protrusion 32 is formed by stamping, a connection region 36 is formed between two adjacent protrusions 32, and the connection region 36 is a stress concentration region. The portion of the nick groove 31 at the intersection with the connection region 36 is more prone to cracking compared to other regions. When the battery cell 20, composed of the pressure relief component 3, undergoes pressure relief due to thermal runaway, the portion of the nick groove 31 at the intersection with the connection region 36 cracks first, followed by cracking in other regions of the nick groove 31, thereby forming a pressure relief channel.

Referring to FIG. 7 and according to some embodiments of the present disclosure, the groove bottom wall 351 is provided with a third surface 352 facing an opening of the recessed groove 35, and the protrusion 32 protrudes from the third surface 352.

The third surface 352 is a surface of the groove bottom wall 351 facing the opening of the recessed groove 35, and the nick groove 31 is provided in the third surface 352.

In the above solution, since the recessed groove 35 is formed by the recess of the first surface 33, and the protrusion 32 protrudes from the third surface 352, it allows for reasonable utilization of space in the direction perpendicular to the third surface 352, thus reducing space occupation.

Referring to FIGS. 6 and 7, and according to some embodiments of the present disclosure, a height of the protrusion 32 protruding from the third surface 352 is H1, and a thickness of the nick groove 31 arranged at the groove bottom wall 351 is H2, satisfying a condition: 1≤H1/H2≤ 10.

The thickness direction of the groove bottom wall 351 is parallel to the thickness direction of the pressure relief component 3, and the depth direction of the nick groove 31 is parallel to the thickness direction of the groove bottom wall 351.

The thickness of the groove bottom wall 351 at the location where the nick groove 31 is arranged refers to the residual thickness of the groove bottom wall 351 at the location where the nick groove 31 is arranged, that is, the thickness of the groove bottom wall 351 after subtracting the depth of the nick groove 31 from the thickness of the groove bottom wall 351.

In the above solution, the height of the protrusion 32 protruding from the third surface 352 satisfies the above relationship, which on the one hand facilitates processing and manufacturing, and on the other hand, allows the groove bottom wall 351 to have higher strength. If H1/H2 is relatively small (e.g., less than 1), the height of the protrusion 32 protruding from the third surface 352 is small, making processing and manufacturing more difficult; if H1/H2 is relatively large (e.g., greater than 10), the height of the protrusion 32 protruding from the third surface 352 is high, resulting in a lower strength of the groove bottom wall 351, so that the groove bottom wall 351 is prone to cracking at the edge of the protrusion 32.

Optionally, H1/H2 can be 1, 2, 3, 4, 5, 6, 7, 8, 9, or 10.

According to some embodiments of the present disclosure, 3≤H1/H2≤5.

Optionally, H1/H2 can be 3, 3.5, 4, 4.5, or 5.

In the above solution, compared to 1≤H1/H2≤10, when 3≤H1/H2≤5, on the one hand, the difficulty of processing and manufacturing is lower, and on the other hand, the strength of the groove bottom wall 351 is higher.

Referring to FIG. 7 and according to some embodiments of the present disclosure, the protrusion 32 protrudes from the first surface 33.

The protrusion 32 protrudes from the first surface 33, and the protrusion 32 has a large deformation capacity. In embodiments where the protrusion 32 is formed by stamping, this allows the groove bottom wall 351 to have a higher strength.

Referring to FIG. 6 and according to some embodiments of the present disclosure, at least two protrusions 32 are arranged in a symmetrical manner about a geometric center of the region enclosed by the nick groove 31.

At least two protrusions 32 can be sequentially arranged along a first direction X, wherein the first direction X is perpendicular to the thickness direction of the pressure relief component 3. The number of the at least two protrusions 32 can be set to an even number, with the even number of protrusions 32 arranged in a symmetrical manner around the midpoint of the region enclosed by the nick groove 31 in the first direction X; or, the number of at least two protrusions 32 can be set to an odd number, wherein the protrusion 32 located in the center among the at least two protrusions 32 is arranged at the midpoint of the region enclosed by the nick groove 31 in both the first direction X and the second direction Y, and the remaining protrusions 32 are arranged in a symmetrical manner around the central protrusion 32.

In the above solution, at least two protrusions 32 are arranged in a symmetrical manner about the geometric center of the region enclosed by the nick groove 31, thus enabling the pressure relief component 3 to have higher strength in the region enclosed by the nick groove 31. The forces in the region enclosed by the nick groove 31 are balanced, which facilitates the cracking of the nick groove 31.

According to some embodiments of the present disclosure, two protrusions 32 are arranged in the region enclosed by the nick groove 31, with the two protrusions 32 arranged along the first direction X. The two protrusions 32 are connected by a connection region 36, and the connection region 36 extends in the second direction Y, wherein the first direction X, the second direction Y, and the thickness direction Z of the pressure relief component 3 are mutually perpendicular to each other. The two ends of the connection region 36 extend to the nick groove 31. The connection region 36 can be the region between the two adjacent protrusions 32.

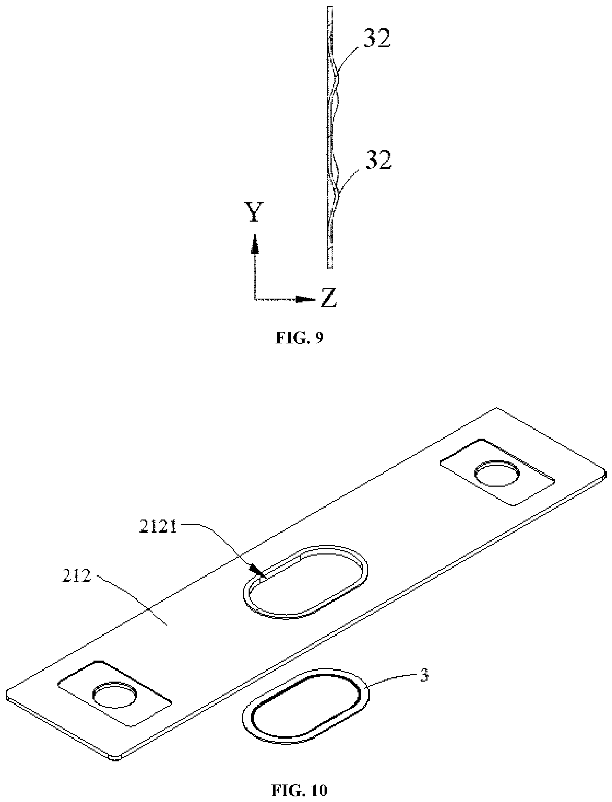

Referring to FIGS. 8 and 9, FIG. 8 is a schematic diagram of an arrangement of multiple protrusions of a pressure relief component along a first direction provided in some embodiments of the present disclosure; FIG. 9 is a schematic diagram of an arrangement of multiple protrusions of a pressure relief component along a second direction provided in some embodiments of the present disclosure. According to some embodiments of the present disclosure, multiple protrusions 32 are arranged in the region enclosed by the nick groove 31, with the multiple protrusions 32 arranged along the first direction X. Multiple protrusions 32 are arranged along the second direction Y, with a relatively large number of protrusions 32 arranged in the region enclosed by the nick groove 31.

The embodiment of the present disclosure provides a battery cell 20, and the battery cell 20 includes the pressure relief component 3 provided in any of the above embodiments.

According to the battery cell 20 of the embodiments of the present disclosure, the above-mentioned pressure relief component 3 is adopted, which has a longer service life.

Referring to FIG. 10, FIG. 10 is a schematic diagram of structures of an end cover and a pressure relief component provided in some embodiments of the present disclosure. According to some embodiments of the present disclosure, the battery cell 20 includes a shell 211 and an end cover 212, wherein the shell 211 is provided with an opening, the end cover 212 closes the opening, the end cover 212 is provided with a through hole 2121, and the pressure relief component 3 seals the through hole 2121.

The pressure relief component 3 can be a rupture disc, and the pressure relief component 3 can be welded to the end cover 212, or the pressure relief component 3 can also be bonded to the end cover 212.

In the above solution, the through hole 2121 is a pressure relief hole, and the pressure relief component 3 seals the through hole 2121. Thus, the pressure relief component 3 has a longer service life, which enables the battery cell 20 to have good long-term reliability.

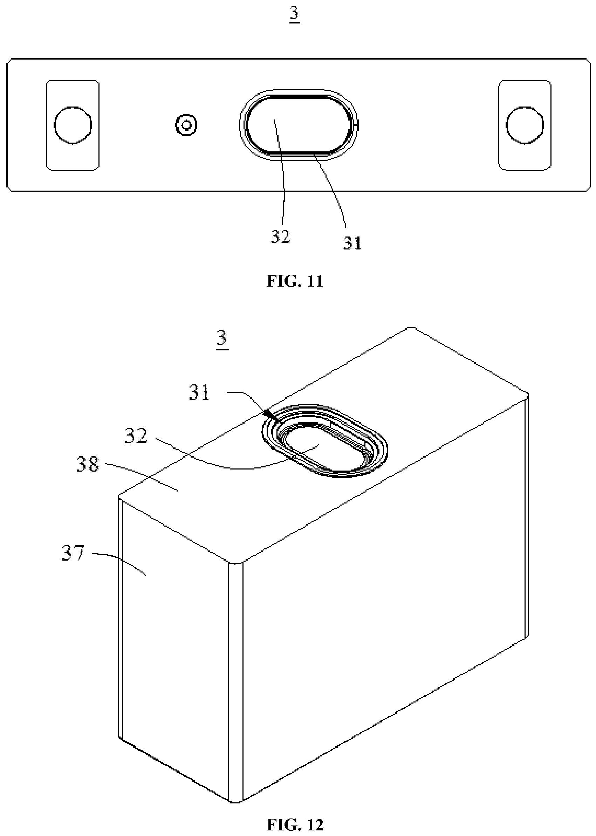

Referring to FIG. 11, FIG. 11 is a schematic diagram of a structure of a pressure relief component provided in some other embodiments of the present disclosure. According to some embodiments of the present disclosure, as shown in FIGS. 3 and 11, the battery cell 20 includes a shell 211 and an end cover 212, the shell 211 is provided with an opening, the end cover 212 closes the opening, and the pressure relief component 3 is the end cover 212.

In the above solution, the pressure relief component 3 can be the end cover 212, thus allowing the end cover 212 to have a pressure relief function. A pressure relief structure is formed by providing a nick groove 31 on the end cover 212, and thus, the pressure relief structure has better stability and good long-term reliability.

Referring to FIG. 12, FIG. 12 is a schematic diagram of a structure of a pressure relief component provided in some other embodiments of the present disclosure. According to some embodiments of the present disclosure, as shown in FIGS. 3 and 12, the battery cell 20 includes a shell 211 and an end cover 212, the shell 211 is provided with an opening, the end cover 212 closes the opening, and the pressure relief component 3 is the shell 211.

In the above solution, the pressure relief component 3 can be the shell 211, so that the pressure relief component 3 has both a function of accommodating the electrode assembly 22 and a pressure relief function.

In some embodiments, referring to FIG. 12, the shell 211 includes a peripheral wall 37 and a bottom wall 38, wherein the peripheral wall 37 is arranged around the edge of the bottom wall 38, and the peripheral wall 37 and the bottom wall 38 together define a holding space. One end opposite the bottom wall 38 of the peripheral wall 37 forms an opening, and the bottom wall 38 is the pressure relief component 3. The end cover 212 is configured to cover the opening. The peripheral wall 37 and the bottom wall 38 are integrally molded structures.

In embodiments where the shell 211 is a cylinder, the shell 211 can be provided with two wall portions, wherein one wall portion is the bottom wall 38 and the other wall portion is the cylindrical peripheral wall 37. As shown in FIG. 12, in the embodiment where the shell 211 is a rectangular prism, the shell 211 can be provided with five wall portions, one bottom wall 38 and four side walls, with the four side walls sequentially connected end to end to form the peripheral wall 37.

According to some embodiments of the present disclosure, the embodiments of the present disclosure provide a battery 100, including any of the battery cells 20 provided in the above embodiments.

According to some embodiments of the present disclosure, the embodiment of the present disclosure further provides an electrical device, which includes the electrical device 100 provided by any of the embodiments as described above. The battery 100 is configured to provide electric energy.

The electrical device can be any of the devices described above that apply the battery 100.

According to some embodiments of the present disclosure, with reference to FIG. 3 to FIG. 12, the embodiments of the present disclosure provide a battery cell 20, wherein the battery cell 20 includes a housing 21, an electrode assembly 22, and a pressure relief component 3. The housing 21 includes a shell 211 and an end cover 212, wherein the shell 211 is provided with an opening, the end cover 212 closes the opening, the end cover 212 is provided with a through hole 2121, the pressure relief component 3 seals the through hole 2121, and the pressure relief component 3 is a rupture disc. The pressure relief component 3 includes a first surface 33 and a second surface 34 that are oppositely arranged along its thickness direction, wherein the first surface 33 is provided with a recessed groove 35, the nick groove 31 is arranged at a groove bottom wall 351 of the recessed groove 35, and the protrusion 32 is a portion of the groove bottom wall 351. The groove bottom wall 351 is provided with a third surface 352 facing an opening of the recessed groove 35, and the protrusion 32 protrudes from the third surface 352 and protrudes from the first surface 33. The nick groove 31 is arranged along the edge of the groove bottom wall 351 of the recessed groove 35, and the nick groove 31 is in a circular shape. Two protrusions 32 are provided in the region enclosed by the nick groove 31, and the two protrusions 32 are arranged along the first direction X. The two protrusions 32 are arranged in a symmetrical manner about a geometric center of the region enclosed by the nick groove 31. The two protrusions 32 are connected by a connection region 36. The connection region 36 extends along the second direction Y. Each end of the connection region 36 extends to the nick groove 31.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A pressure relief component, configured for a battery cell, wherein the pressure relief component is provided with a nick groove, at least two protrusions are arranged within a region enclosed by the nick groove, the protrusions protrude from a side of the pressure relief component in a thickness direction, and the protrusions are recessed on another side of the pressure relief component in the thickness direction.

2. The pressure relief component according to claim 1, wherein the nick groove is in a circular shape.

3. The pressure relief component according to claim 1 or 2, wherein a portion of the nick groove is arranged along an edge of the protrusion.

4. The pressure relief component according to claim 3, wherein the nick groove comprises a first straight groove segment, a second straight groove segment, a first arc groove segment, and a second arc groove segment; the first arc groove segment and the second arc groove segment are respectively arranged along the edges of the two protrusions; the first straight groove segment connects a first end of the first arc groove segment and a first end of the second arc groove segment; and the second straight groove segment connects a second end of the first arc groove segment and a second end of the second arc groove segment.

5. The pressure relief component according to any one of claims 1 to 4, wherein the pressure relief component comprises a first surface and a second surface that are oppositely arranged along its thickness direction, the first surface is provided with a recessed groove, the nick groove is arranged at a groove bottom wall of the recessed groove, and the protrusion is a portion of the groove bottom wall.

6. The pressure relief component according to claim 5, wherein the groove bottom wall is provided with a third surface facing an opening of the recessed groove, and the protrusion protrudes from the third surface.

7. The pressure relief component according to claim 6, wherein a height of the protrusion protruding from the third surface is H1, and a thickness of the nick groove arranged at the groove bottom wall is H2, satisfying a condition: 1≤H1/H2≤10.

8. The pressure relief component according to claim 7, wherein 3≤H1/H2≤5.

9. The pressure relief component according to any one of claims 5 to 8, wherein the protrusion protrudes from the first surface.

10. The pressure relief component according to any one of claims 1 to 9, wherein at least two protrusions are arranged in a symmetrical manner about a geometric center of the region enclosed by the nick groove.

11. The pressure relief component according to any one of claims 1 to 10, wherein the protrusion is formed by stamping.

12. A battery cell, comprising the pressure relief component according to any one of claims 1 to 11.

13. The battery cell according to claim 12, wherein the battery cell comprises a shell and an end cover, the shell is provided with an opening, the end cover closes the opening, the end cover is provided with a through hole, and the pressure relief component seals the through hole.

14. The battery cell according to claim 12, wherein the battery cell comprises a shell and an end cover, the shell is provided with an opening, the end cover closes the opening, and the pressure relief component is the end cover.

15. The battery cell according to claim 12, wherein the battery cell comprises a shell and an end cover, the shell is provided with an opening, the end cover closes the opening, and the pressure relief component is the shell.

16. A battery, comprising the battery cell according to any one of claims 12 to 15.

17. An electrical device, comprising the battery according to claim 16, wherein the battery is configured to provide electrical energy.
